(19) 【Europäisches Patentamt / European Patent Office / Office européen des brevets】

(11) **EP 4 533 951 A1**

(12) **EUROPEAN PATENT APPLICATION**
published in accordance with Art. 153(4) EPC

(43) Date of publication:
**09.04.2025 Bulletin 2025/15**

(21) Application number: **23823315.9**

(22) Date of filing: **23.05.2023**

(51) International Patent Classification (IPC):
**A01N 65/28** (2009.01)          **A01N 65/20** (2009.01)
**A01N 65/22** (2009.01)          **A01P 13/02** (2006.01)

(52) Cooperative Patent Classification (CPC):
**A01N 65/20; A01N 65/22; A01N 65/28; A01P 13/02**

(86) International application number:
**PCT/ES2023/070332**

(87) International publication number:
**WO 2023/242453 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.05.2022 ES 202200044**

(71) Applicant: **Universidade de Vigo
36310 Vigo, Pontevedra (ES)**

(72) Inventors:
• **PEDROL BONJOCH, Nuria
36310 Vigo (ES)**
• **PARDO MURAS, María
36310 Vigo (Pontevedra) (ES)**
• **GONZÁLEZ PUIG, Carolina
36310 Vigo (Pontevedra) (ES)**

(74) Representative: **Clarke, Modet y Cía., S.L.
C/ Suero de Quiñones 34-36
28002 Madrid (ES)**

(54) **HERBICIDAL COMPOSITION COMPRISING EUCALYPTUS, BROOM AND APPLE MINT BIOMASS**

(57)    The present invention relates to compositions with herbicidal effect based on eucalyptus, broom and apple mint biomass, both in crushed form and pelleted. This product has utility in the agricultural sector and in those other sectors where control of the arvensis flora is necessary. The compositions have an effect on the germination and growth of arvensis species, without affecting crops, being an ecological and sustainable alternative to synthetic herbicides and/or a new control tool in integrated management of weeds.

**EP 4 533 951 A1**

**Description**

FIELD OF THE INVENTION

The present invention belongs to agriculture, more specifically it is within plant production, in the inhibition of the germination and growth of the arvensis flora through the use of compositions comprising crushed agroforestry biomass or pelleted.

STATE OF THE ART

The integral and efficient management of agroforestry resources must provide inputs that allow self-sufficiency for plant production and the conservation of soil fertility. In revegetation agriculture and space conservation, the transition to more sustainable systems requires natural inputs that at least partially replace the chemical synthesis fertilizers and phytosanitary products currently used. As far as possible, management should base its efficiency on the recycling of nutrients within the system and on the contribution of inputs produced from renewable agroforestry biomass.

Environmental considerations have had an increasing weight in the formulations of the Common Agricultural Policy (CAP), which sets as one of its main objectives the sustainable management of natural resources, which will be mandatory in the new CAP 2023-2027. In this framework, organic farming is increasingly shown as one of the most sustainable productive options (Reganold and Wachter, 2016. Nature Plants 2, 15221), ensuring the long-term stability of the four pillars of sustainability: production, environment, economy and well-being.

The control of arvensis flora (unwanted flora, adventitious flora, weeds, or "weeds") in crop fields and agricultural production greenhouses, nurseries, urban orchards, protected spaces, parks and gardens, public roads, urban and peri-urban green spaces, slope vegetation, wastelands, garbage dumps, and edges and medians of roads and tracks, should increasingly tend to the use of integrated management tools, minimizing the use of synthetic herbicides.

Chemical control based on the use of synthetic herbicides, which selectively affect the arvensis flora of the crop, is currently the most used method due to its *a priori* profitability. In 2017, the EU recorded pesticide consumption of 360.000 tons, with Spain at the top of the list with 19,5%, ahead of France (18,7%), Italy (13,8%) and Germany (12,3%). Specifically, in the herbicide group, the Spanish agricultural sector is the third most used in the European Union. Among the drawbacks associated with the use of these herbicides, its potential toxicity stands out, even at very low concentrations. Its massive use has increased soil and water pollution, with the consequent deterioration of natural ecosystems, agroecosystems and urban ecosystems, since some active ingredients are incorporated into the trophic chains representing a direct risk to animal and human health (WHO 2017).

In recent years, the abuse of herbicides has produced an increase in ecotypes of resistant arvensis species. The appearance of these resistant weeds is linked to the repeated use of herbicides with the same mode of action (MOA) and on the same crop (Holt, 1992. Weed Technol. 6: 615-620). The problem is pressing, since no new MOAs have been introduced since 1980 and, of the 31 sites of action of the known herbicides, the species of arvensis flora have developed resistance to 21 of them (Heap, 2021, The International Survey of Herbicide Resistant Weeds. www.weedscience.com). The lack of new MOAs coupled with the exponential increase in resistant weeds threatens to render nearly all existing herbicides unusable by 2050 (Westwood et al. 2018. Weed Sci. 66: 275-285).

At present, organic production in the EU is regulated by the regulation (EU) 2018/848, which prohibits the use of synthetic pesticides. At the moment, European regulations do not contemplate a single plant protection product or active substance authorized as a herbicide in organic farming (Annex I of EC Regulation 2021/1165). That is why in organic production systems weed control is considered the biggest agronomic problem.

For all the above reasons, there is a growing demand for new products and methods for the control of more effective, economical, healthy, and environmentally friendly weeds, and with potential for certification in organic farming.

An alternative to synthetic herbicides has to do with the phenomenon of allelopathy that takes place in some plants. Allelopathy can be defined as the positive or negative effect exerted by one plant on another(s) and which is mediated by the production and release into the environment of allelochemical compounds. These compounds may be volatile in nature (VOC) or water-soluble (Rice, 1984. Allelopathy, 2nd ed. Academic Press, Orlando. pp: 189).

Allelochemical compounds can be found in any organ of the plant and are released into the environment by different routes: washing or leaching, exudation through the roots, volatilization or decomposition of the plant itself. In the medium they can inhibit the germination and growth of other plants (Ferguson *et al. 2003.* Institute of Food and Agricultural Sciences, EDIS) or affect its morphogenesis by disrupting physiological processes such as photosynthesis, respiration, water relations or hormonal balance (Tigre *et al.* 2012. Institute of Food and Agricultural Sciences, EDIS). Allelochemical compounds are useful in the search for new natural herbicides since (i) they have MOAs different from those of synthetic herbicides; (ii) they have a greater specific interaction with arvensis flora and pests due to their natural structural diversity; (iii) they cause less environmental impact, since they tend to have a short half-life and are more biodegradable; and (iv) they have greater activity at a lower concentration compared to the herbicidal active ingredients currently available (Soltys et al. 2013. Herbicides-Current research and case studies in use. Intech. pp 517-542).

In order to obtain herbicidal compositions comprising these compounds, one strategy consists in extracting the allelochemicals from plant material and treating the crop with the resulting extract. Efficacy of the extracts is limited by their rate of volatilization, adsorption, degradation or microbial transformation. Due to the composition of the soil, most of the isolated compounds that are effective in the laboratory as herbicides, in the field have little or no effectiveness (Kobayasi 2004. Weed Biology and Management 4:1-7). Therefore, the alleged *in vitro* herbicidal activity is not transferable to an actual seed bank of weeds in agricultural soil, the germination and establishment of which extends over time.

The problem to be solved is to provide a sustainable, durable, selective and effective herbicidal composition that can be used in ecological farming, from natural resources existing in the agroecosystem.

The potential use of eucalyptus, scrub and apple mint biomass as herbicides has been described (Puig et al., 2019. Crop Protection 121: 57-65; Pardo-Muras et al., 2020. Plants 9: 203; Iglesias-Rodriguez, 2016. Mentha suaveolens Ehrh. for weed control: from in vitro evidence to application in greenhouse vegetable production. MSc Thesis. University of Vigo, ES 2719451 B2). However, new compositions are needed that are effective against a greater number of species of arvensis flora, and that have a longer duration in the field, covering the entire emergency period of the arvensis flora of the soil seed bank. Both the composition and the format of the compositions are important because they will be relevant in the effect and duration of these compositions in the soil.

The present invention solves this problem by providing new herbicidal compositions with improved selectivity and effectiveness, which represents an unprecedented advance in both agriculture and the use of natural resources. The compositions described are suitable for organic farming and protected areas and are also suitable as an integrated management tool. They favor the recycling of nutrients in the agroforestry system and reduce the dependence on external inputs, both synthetic herbicides and fuels for mechanical control. The application of biomass to soil can provide ecosystem services such as increasing soil fertility by incorporating organic matter, providing nitrogen by introducing a legume into the composition, capturing carbon, and correspondingly decreasing net greenhouse gas emissions.

## DESCRIPTION OF THE INVENTION

## SUMMARY OF THE INVENTION

The present invention relates to the control of arvensis flora (unwanted flora, adventitious flora, weeds, or "weeds") in agricultural production fields and greenhouses, nurseries, urban orchards, protected spaces, parks and gardens, public roads, urban and peri-urban green spaces, slope vegetation, wastes, garbage dumps, and edges and medians of roads and tracks.

In a first embodiment, the invention relates to a herbicidal composition comprising eucalyptus biomass (*Eucalyptus globulus* Labill), broom biomass (*Cytisus scoparius* (L.) Link) and apple mint biomass (*Mentha suaveolens* Ehrh.).

In a second embodiment, the invention relates to a herbicidal composition comprising between 50 and 100% w/w eucalyptus biomass, between 0 and 40% w/w broom biomass, and between 0 and 20% w/w apple mint biomass, based on the total weight of the composition.

In a third embodiment, the invention relates to a herbicidal composition comprising between 60 and 90% w/w eucalyptus biomass, between 5 and 30% w/w broom biomass, and between 5 and 10% w/w apple mint biomass, based on the total weight of the composition.

In a fourth embodiment, the invention relates to a herbicidal composition comprising between 60 and 75% w/w eucalyptus biomass, between 20 and 30% w/w broom biomass, and between 5 and 10% w/w apple mint biomass, based on the total weight of the composition.

In a fifth embodiment, the invention relates to a herbicidal composition comprising 65% w/w eucalyptus biomass, 25% w/w broom biomass, and 10% w/w apple mint biomass, based on the total weight of the composition.

In a sixth embodiment, the invention relates to the herbicidal composition of the above embodiments, pelleted.

In a seventh embodiment, the invention relates to the use of the herbicidal composition of any of the preceding embodiments in inhibiting the germination and/or growth of arvensis species.

In an eighth embodiment, the invention relates to a method of inhibiting the germination and/or growth of arvensis species comprising administering to a soil any of the compositions of the previous embodiments.

## BRIEF DESCRIPTION OF THE DRAWINGS

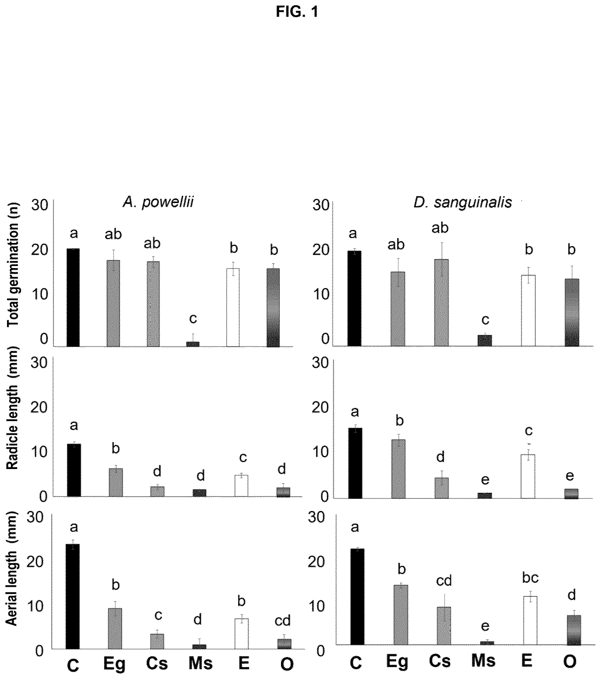

Figure 1. Effect of interactions between volatile and soluble compounds released from the phyllodes of *Eucalyptus globulus* (Eg), flowering branches of *Cytisus scoparius* (Cs) and *Mentha suaveolens* (Ms), and the mixture of the three species at the ratio 65:25:10 (observed effect, O), as well as the sum of the effects of each species separately in the mixture (expected effect, E) on the germination and early growth of the arvensis species *Amaranthus powellii* and *Digitaria sanguinalis* in agricultural soil. The bars represent the mean values $\pm$ SD. Mean values labeled with distinct letters are significantly different at $P \leq 0,05$ (post-hoc LSD or Tamhane's T2 test for multiple mean comparison). C is the assay control.

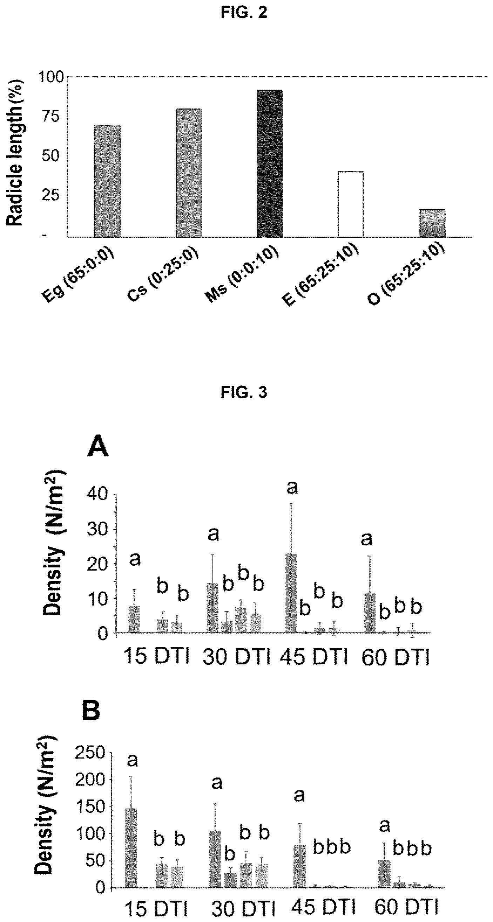

Figure 2. Effect of *Eucalyptus globulus* (65%), *Cytisus scoparius* (25%) and *Mentha suaveolens* (10%) separately, the expected effect of their combination (sum of effects) and the observed effect of the three species in the mixture, on the root length of the arvensis species *Amaranthus powellii.*

Figure 3. Evolution of the density of arvensis dicotyledons (A) and monocotyledons (B) during the assay (15, 30, 45 and 60 DTI). The bars represent the mean values $\pm$ SD. Mean values labeled with distinct letters are significantly different at $P \leq 0,05$ (post-hoc LSD or Tamhane's T2 test). First column: control, second column: weed, third column: apple mint, fourth column: mixture.

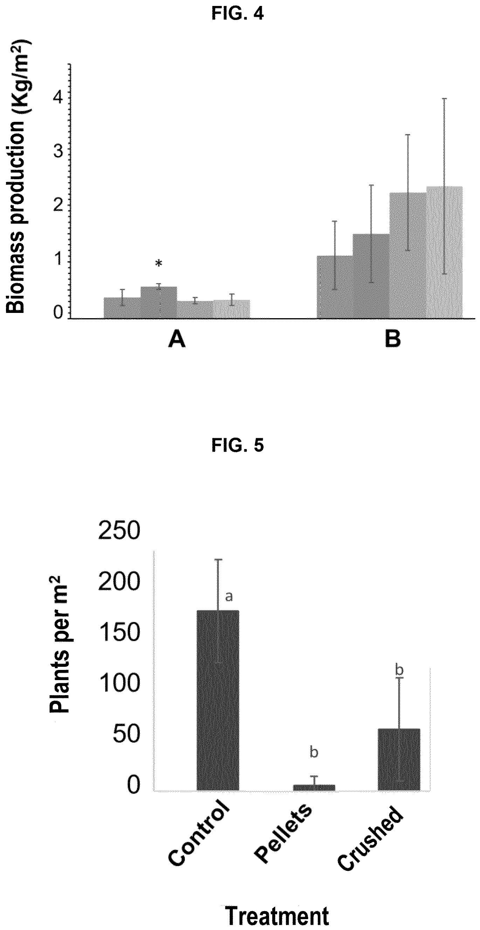

Figure 4. Final harvest of bean (A) and turnip (B). The bars represent the mean values $\pm$ SD. The asterisk denotes that it is significantly different from $P \leq 0,05$ (post-hoc LSD or Tamhane's T2 test for multiple mean comparison). First column: control, second column: weed, third column: apple mint, fourth column: mixture.

Figure 5. Emergence of arvensis ($n° \cdot m^{-2}$) in plots treated with eucalyptus pellets and crushed eucalyptus versus untreated plots (control), at 30 days after incorporation (DTI). Bars represent mean value $\pm$ SD. Different letters indicate significant differences ($P \leq 0,05$) between treatments (post-hoc LSD or Tamhane's T2 test for multiple mean comparison).

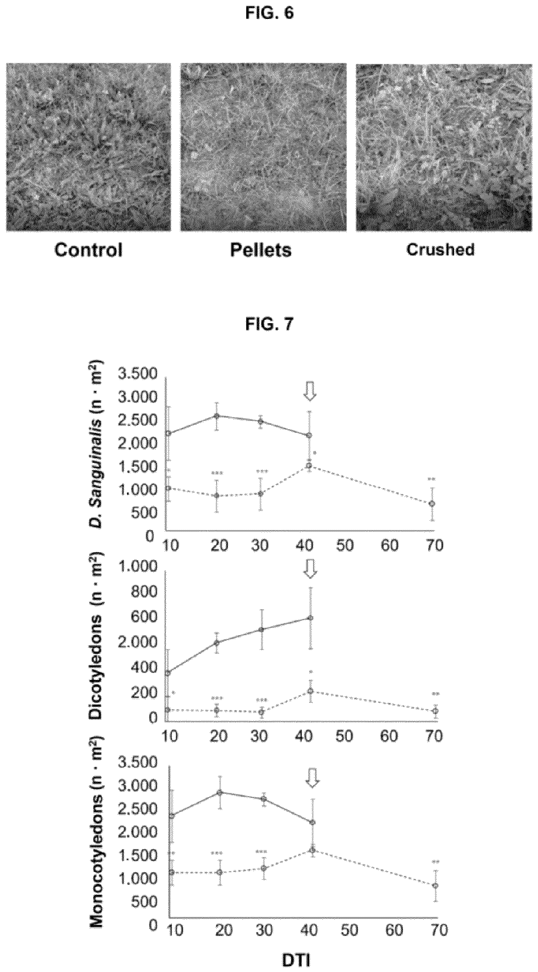

Figure 6. Status of the plot with crushed eucalyptus and with pellets at 5 months after incorporation, as well as of the control plot.

Figure 7. Emergency counts of the most abundant arvensis species: *Digitaria sanguinalis,* and of the total of dicotyledon and monocotyledon weeds ($n° \cdot m^{-2}$) in the plots treated with eucalyptus pellets (discontinuous line) and without pellets (continuous line) over 70 days after incorporation (DTI). An arrow represents the need for weeding due to infestation in the plots without pellets at 42 days. The symbols represent the mean values of the four replicates $\pm$ S.D. Asterisks denote significant differences in relation to the plots without pellets * $P \leq 0,05;$ ** $P \leq 0,01$; ** * $P \leq 0,001$; non-significant $P > 0,05$ (*t-test* for independent samples).

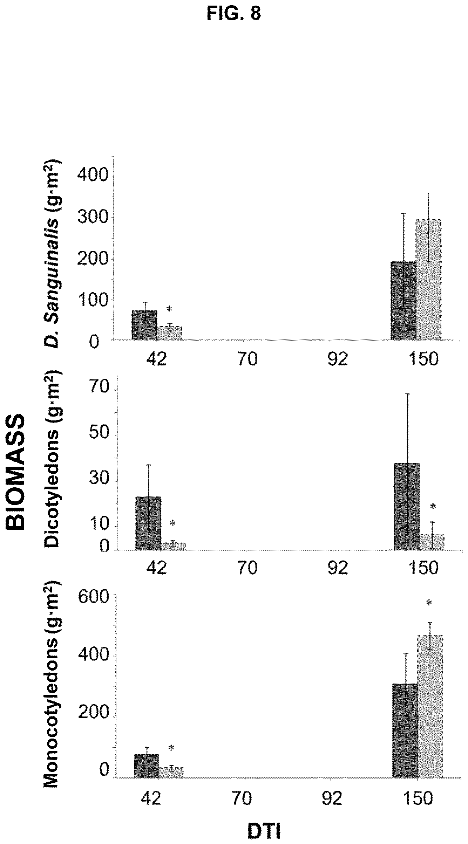

Figure 8. Total biomass of the arvensis species *Digitaria sanguinalis,* and of the total dicotyledon and monocotyledon weeds ($g \cdot m^{-2}$) in the plots treated with eucalyptus pellets (light gray columns) and without pellets (dark gray columns) at 42 and 150 days after incorporation (DTI). Arrows represent the need for weeding due to infestation in the plots without pellets (42 and 92 DTI) and with pellets (70 DTI). The bars represent the mean values $\pm$ SD. Asterisks denote significant differences relative to plots without pellets * $P \leq 0,05$; non-significant $P > 0,05$ (*t-test* for independent samples).

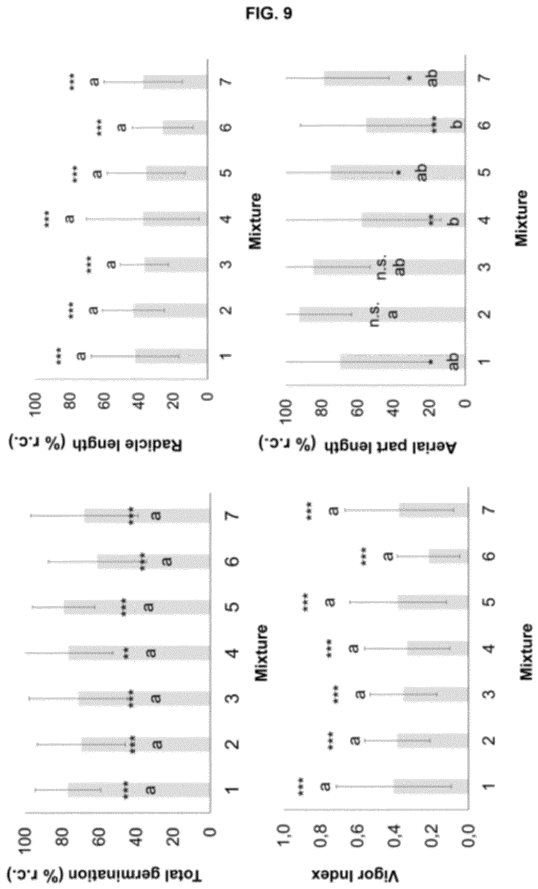

Figure 9. Phytotoxic effect of the aqueous extracts of mixtures at different ratios of eucalyptus, broom, and apple mint (Mixtures 1 to 7) on the germination, early growth and vigor index of the arvensis species *Amaranthus powellii, Digitaria sanguinalis and Conyza canadensis.* The bars represent the percentage mean values compared to the control (% r.c.) $\pm$ SD. Asterisks indicate significant differences between each mixture and the control (dashed line) * $P \leq 0,05$; ** $P \leq 0,01$; ** * $P \leq 0,001$; n.s. non-significant $P > 0,05$ (*t-test* for independent samples). Different letters represent significant differences between the different mixtures (post hoc LSD or Tamhane's T2 test for multiple mean comparison).

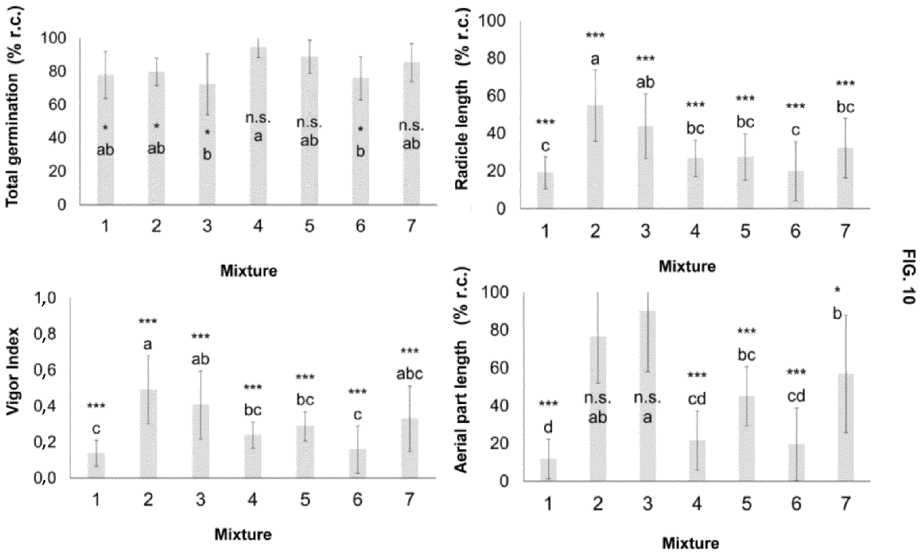

Figure 10. Phytotoxic effect of the aqueous extracts of mixtures at different ratios of eucalyptus, broom, and apple mint on the germination (mixtures 1 to 7), early growth and vigor index of the arvensis species *Digitaria sanguinalis.* The bars represent the percentage mean values compared to the control (% r.c.) $\pm$ SD. Asterisks denote significant differences between each mixture and the control (dashed line) * $P \leq 0,05$; ** $P \leq 0,01$; ** * $P \leq 0,001$; n.s. non-significant $P > 0,05$ (*t-test* for independent samples). Different letters represent significant differences between the different mixtures (post hoc LSD or Tamhane's T2 test for multiple mean comparison).

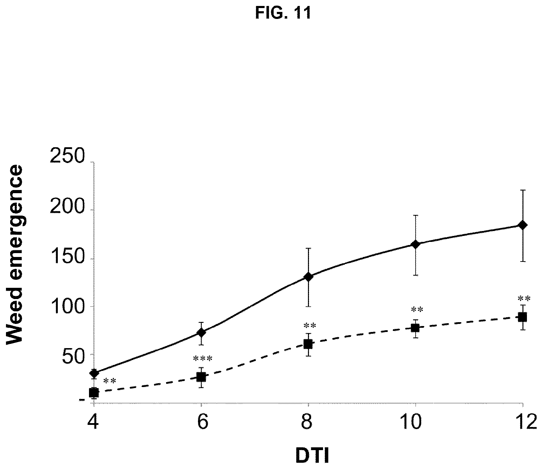

Figure 11. Weed emergence throughout the 12 days after incorporation (DTI) of the mixing pellets into the soil in a pot experiment. The symbols represent mean values of four replicates $\pm$ SD. Asterisks denote significant differences relative to the control (without pellets) ** $P \le 0{,}01$; * **$P \le 0{,}001$ (t-test for independent samples).

DETAILED DESCRIPTION OF THE INVENTION

The present invention describes compositions with herbicidal activity against arvensis species and a new format of said compositions that improves their use, favors efficacy, facilitates application, and prolongs the herbicidal effect of the compositions in crop soils.

The use of biomass with herbicide potential available in the agroecosystem for weed control allows an efficient use of agroforestry resources, facilitating nutrient recycling. In the agroforestry systems of the Iberian Peninsula, there is a huge variety of wild plants, biomass and forest co-products of allelopathic nature that have the potential to become appropriate tools for weed control.

In a first embodiment, the invention relates to a composition comprising eucalyptus biomass (*Eucalyptus globulus* Labill), broom biomass (*Cytisus scoparius* (L.) Link) and apple mint biomass (*Mentha suaveolens* Ehrh.).

The species *Eucalyptus globulus* Labill. (eucalyptus) is the woody species most widespread by humans. In Europe it appears in the South and West, Mediterranean, Azores and Ireland, and also spreads throughout most of America. It is known that the biomass of *E. globulus* releases allelochemical compounds to the soil (Puig et al., 2018. J Chem Ecol, 44(7-8), 658-670) with herbicidal efficacy (Puig et al., 2019. Crop Protection, 121, 57-65).

The phytotoxicity of the species *Cytisus scoparius* (L.) Link (broom) has been described, suggesting that it could be used for the control of arvensis or weed when incorporated into the soil as a green manure (Pardo-Muras et al., 2020. Plants, 9(2), 203).

The genus *Mentha* includes aromatic species appreciated for their medicinal properties. A discrete number of studies have suggested the phytotoxic potential of some species of the genus (Campiglia et al., 2007. Italian Journal of Agronomy 2:171-175; Maia et al., 2011. Revista Brasileira de Plantas Medicinais 13:253-25). Apple mint (*Mentha suaveolens* Ehrh.) is widely distributed in Atlantic agroforestry ecosystems and there are indications of its herbicidal potential (Iglesias-Rodriguez 2016. Mentha suaveolens Ehrh. for weed control: from in vitro evidence to application in greenhouse vegetable production. MSc Thesis. University of Vigo).

Until the present invention, the effect on the soil of the combination of the biomass of these species was unknown, since the interaction between different allelochemicals could generate effects as disparate as synergy, addition or antagonism. These effects cannot be predicted, let alone the necessary concentration of a given species. In addition, the specificity of the species against which they can act may be different, so a specific combination of allelopathic biomass for use as a herbicide is not obvious, since experimental data demonstrating their activity and selectivity are necessary.

In a more preferred embodiment, the composition comprises between 50 and 100 w/w % eucalyptus biomass (preferably between 60 and 90 w/w %, more preferably between 60 and 75 w/w %), between 0 and 40 w/w % broom biomass (preferably between 5 and 30 w/w %, more preferably between 20 and 30 w/w %) and between 0 and 20 w/w % apple mint biomass (preferably between 5 and 10 w/w %). In a more preferred embodiment, the composition comprises between 60 - 75 w/w eucalyptus biomass, between 20 - 30% w/w broom biomass and 5 - 10% w/w apple mint biomass. A particular embodiment of this invention relates to a composition comprising 65% w/w of eucalyptus biomass, 25% w/w of broom biomass and 10% w/w of apple mint biomass, relative to the total weight of the composition.

The ingredients of the composition of the invention are preferably forest residues: fine branches and foliage of eucalyptus, and green branches and foliage of broom, and foliage of apple mint. The production of the composition of the invention implies that these biomass residues and surpluses derived from various activities in the agroforestry sector are redirected, in a circular economy strategy, to a new industrial use.

The compositions conforming to the indicated-above proportions are capable of inhibiting the germination of grains and seeds and reducing the growth of seedlings of arvensis species, both monocotyledons and dicotyledons. Examples of arvensis species are *Abutilon theophrasti, Adonis annua, A. microcarpa, Alisma plantago-aquatica, Alopecurus myosuroides, Althaea hirsuta, Amaranthus blitoides, A. hybridus, A. powellii, A. retroflexus, Ammannia robusta, Anacyclus clavatus, Avena barbata, A. fatua, A. sterilis, Bassia scoparia, Bromus catharticus, B. diandrus, B. madritensis, B. rubens, Calendula arvensis, Calystegia sepium, Cardaria draba, Caucalis platycarpos, Chaenorhinum minus, Chenopodium album, C. vulvaria, Convolvulus arvensis, Conyza bonariensis, C. canadensis, Coronilla scorpioides, Cuscuta epithymum, Cyperus difformis, C. rotundus, Datura stramonium, Digitaria sanguinalis, Diplotaxis erucoides, Echinochloa crus-galli, Echium plantagineum, Erodium ciconium, E. cicutarium, E. malacoides, Eruca vesicaria, Euphorbia helioscopia, E. peplus, E. serrata, Fallopia convolvulus, Fumaria capreolata, F. officinalis, Galium aparine, G. tricornutum, Galinsoga parviflora, Geranium dissectum, G. molle, G. rotundifolium, Glaucium corniculatum, Heliotropium europaeum, Heteranthera reniformis, Holcus molli, Hypecoum procumbens, Kickxia spuria, Lactuca serriola, Lamium amplexicaule, L. purpureum, Lathyrus aphaca, Leptochloa fascicularis, Lindernia dubia, Lolium rigidum, Malcolmia africana, Malva sylvestris, Mercurialis annua, Nigella damascena, Oxalis comiculata, O. latifolia, O. pes-caprae, Panicum capillare, Papaver dubium, P. rhoeas, Paspalum dilatatum, P. distichum, Persicaria maculosa, Phalaris brachystachys, P. minor, P. paradoxa, Picris echioides, Plantago lanceolata, P. major, P. media, Platycapnos spicata,* Poa *annua, Polygonum aviculare, Portulaca oleracea, Potentilla reptans, Raphanus raphanistrum, Rapistrum rugosum, Reseda phyteuma, Roemeria hybrida, Rumex acetosa, R. crispus, R. obtusifolius, Scandix pectenveneris, Scirpus maritimus, S. mucronatus, S. supinus, Senecio vulgaris, Setaria pumila, S. verticillata, S. viridis, Sherardia arvensis, Silene vulgaris, Sinapis arvensis, Sisymbrium irio, Solanum nigrum, Sonchus oleraceus, Sorghum halepense, Stellaria media, Taraxacum gr. officinale, Torilis arvensis, T. nodosa, Trifolium repens, Veronica hederifolia, V. persica, Vicia sativa, Viola arvensis, Vulpia alopecuros, V. ciliata, Xanthium echinatum, X. spinosum.* In a more preferred embodiment, the arvensis species is selected from the group comprising *Amaranthus powellii, Amaranthus retroflexus, Chenopodium album, Convolvulus arvensis, Conyza canadensis, Digitaria sanguinalis, Echinochloa crus-galli, Echium plantagineum, Galinsoga parviflora, Lolium rigidum, Mercurialis ambigua, Oxalis corniculata, Polygonum persicaria, Portulaca oleracea, Sinapis arvensis, Stellaria media, Solanum nigrum, and Sonchus sp.*

The composition of the invention influences the germination and early growth of arvensis species, both monocotyledons and dicotyledons, affecting, for example, the elongation of the radicle and/or the growth of the aerial part, which decreases the vigor and viability of the seedling.

It has been found that the effect of the mixture of species is greater than the sum of the effects of the three separately. This demonstrates the synergistic interactions between the compounds of the three, unpredictable effect.

The composition of the invention may be in the form of dry crushed biomass or in the form of pellets.

In one embodiment of the invention, the composition is preferably in pellet form or pelleted (densified biomass). Pelletizing in industrial and agricultural processes is known, but in the context of the present invention, this format allows optimizing the processing of allelopathic biomass, combining the biomass of the different species, their storage, transport and application in the field. In addition, it has been found that the herbicidal effect on the soil of the pelleted composition has a very long biodegradation time, of up to five months, which allows its activity to be prolonged over time and the profitability of the material to be increased. In addition, the pellet densification format allows the mixing of several of the species with selective herbicidal activity. Thus, the pelletizing process of the composition of the invention has a new unexpected and unpredictable effect, beyond the benefits relating to transportation, application or storage.

Another embodiment of the invention therefore relates to a pelleted composition comprising between 50 and 100 wt/wt % eucalyptus biomass, between 0 and 40 wt/wt % broom biomass and between 0 and 20 wt/wt % apple mint biomass. In a more preferred embodiment, the pelleted composition comprises between 60 - 90 wt/wt % eucalyptus biomass, between 5 - 35 wt/wt % broom biomass, and 5 - 10 wt/wt % apple mint biomass. In an even more preferred embodiment, the pelleted composition comprises between 60 - 75% w/w eucalyptus biomass, between 20 - 30% w/w broom biomass, and 5 - 10% w/w apple mint biomass. A particular embodiment of this invention relates to a pelleted composition consisting of 65% w/w eucalyptus biomass, 25% w/w broom biomass and 10% w/w apple mint biomass. In another preferred embodiment, the pelleted composition is 100% eucalyptus biomass.

The ranges of each indicated-above ingredient in the pelleted composition have the advantage of not needing any additional compound for the compaction of the pellet, as a binder, maintaining its integrity and prolonging its stability.

Another embodiment of the invention relates to the use of the composition of the above embodiments, in crushed form or pelleted, for the inhibition of the germination and/or growth of weeds or arvensis species, both monocotyledons and dicotyledons. Examples of arvensis species are listed above. In a preferred embodiment, the arvensis species is selected that inhibits the composition *Amaranthus powellii, Amaranthus retroflexus, Chenopodium album, Convolvulus arvensis, Conyza canadensis, Digitaria sanguinalis, Echinochloa crus-galli, Echium plantagineum, Galinsoga parviflora, Lolium rigidum, Mercurialis ambigua, Oxalis comiculata, Polygonum persicaria, Portulaca oleracea, Sinapis arvensis, Stellaria media, Solanum nigrum, and Sonchus sp.*

The compositions described in the present invention are capable of reducing the germination of arvensis species by between 20 and 95%.

The compositions described in the present invention are capable of reducing the biomass of arvensis species by between 40 and 80%.

The invention relates as well to a method of inhibiting germination and/or growth of arvensis species comprising administering into a soil any of the compositions of the above embodiments. The administration of the composition may be in any manner known to the person skilled in the art, for example, and without limitation, by *mulching (mulching* or padding), in pre-emergence or post-emergence crops on the already germinated weed seedlings, superficially or incorporated, manually or automatically, etc. The method would comprise (a) drying the biomass, optionally (b) homogeneous mixing and pelletizing of the biomass, (c) spreading the composition on the soil, preferably by manual or mechanical tumbling, and (d) incorporating the composition into the soil or leaving on the surface.

The biomass present in the composition of the invention has allelopathic properties and herbicidal activity when applied to agricultural soil. This biomass, properly combined and properly processed to optimize its effect and management, can become a new resource for weed control, economically and environmentally appropriate. In addition, the allelopathic substances present in the composition produce a remarkable effect due to complex synergistic interactions; that is, new and multiple MOAs unlikely to generate resistance, making it suitable for organic farming and protected areas, and also as an integrated management tool.

The use of the herbicidal composition of the invention favors nutrient recycling in the agroforestry system and reduces dependence on external inputs, both synthetic herbicides and fuels for mechanical control with agricultural machinery, with a corresponding decrease in net greenhouse gas emissions. In addition, the application of biomass to the soil provides ecosystem services such as the increase in soil fertility due to the incorporation of organic matter, the contribution of nitrogen, and the sequestration of carbon.

The natural bioactive ingredients present in the herbicidal composition of the invention are vegetable secondary metabolites (essential oils, phenolic acids, and flavonoids) harmless or beneficial to human health at the effective herbicidal doses: they have been widely used and tested for safety (at the active concentrations of the composition) or are authorized for use in human, veterinary, cosmetic, and food medicine.

The herbicidal composition of the invention is based on powerful intra- and interspecific synergies that occur between the natural bioactive principles of different chemical classes contained in the biomass of the selected allelopathic species (Tables 1 and 2). Thus, the herbicidal efficacy lies in the phytotoxic interactions that occur in the cocktail of allelochemicals at very low individual concentrations (on the order of hundredths of a ppm of each volatile compound released into the soil pores, and from units to hundredths of a $\mu$mol/L of each phenolic compound in the soil water) that the composition releases sequentially once applied. The maximum amounts releasable to the agroecosystem by the composition, over a period of weeks to months, are well below the phytotoxicity threshold of each active ingredient separately, so the product is environmentally friendly and its use reduces the unwanted side effects of synthetic herbicides whose effective doses of one or a few active ingredients are much higher, and are released at once after application.

The herbicidal composition of the invention is in accordance with the principles of pest control in organic farming, good agricultural practices, and the integrated weed management (IWM) strategy demanded by the cap and community environmental policies (main objective of the European Weed Research Society (EWRS) and the state scientific societies that it brings together). The composition of the invention fails to eradicate weeds but maintains their populations at stable levels non-competitive with the crop, through the gradual reduction of the seed bank of the agricultural soil. This preserves the many ecosystem services provided by arvensis species (e.g., soil cover and aeration, protection against erosion and evaporation, organic matter, attraction of pollinators, protection of the crop against diseases and pests, food and shelter for auxiliary micro and macrofauna), and maintains the specific diversity and functional types of the agroecosystem that guarantee its stability and resilience, and with it a sustainable production.

Regarding the protection of biodiversity in agroecosystems, the allelopathic plant species whose biomass makes up the composition of the invention, are abundant and highly productive, and are not protected or vulnerable species. On the other hand, the characteristics of the composition regarding to its multiple mode of action, its low susceptibility to generate resistance, and the safety for a significant number of crops would allow its use in conventional commercial varieties without induced resistance to synthetic herbicides (not genetically modified), as well as in traditional and local cultivars.

The use of the herbicidal composition of the invention alleviates the consumption of synthetic herbicides in conventional and integrated agriculture. The processing of the biomass can be completed with renewable energy, reducing the carbon footprint derived from its production process (e.g., chopping, grinding, mixing and densifying with photovoltaic energy). The applicant has verified, in greenhouse and field assays, that already the first application of the composition reduces by half the need for manual weeding of weeds, so that its use significantly relieves the work with agricultural machinery (dependent on fossil fuels) for mechanical control. On the other hand, the incorporation of plant residues into agricultural soil (and that would otherwise be discarded or incinerated, with the corresponding emission of greenhouse gases) provides organic matter and metabolizable products that stimulate microbial activity and improve its structure, so that the use of the composition contributes to carbon sequestration.

Finally, the herbicidal composition of the invention complies with the DNSH principle (*"Do not significant harm principle"*) and contributes to achieving the following environmental objectives: (i) the protection of water resources, (ii) the circular economy, (iii) pollution prevention, and (iv) the protection and recovery of biodiversity in agroecosystems. In addition, it would obtain a coefficient of 100% (Annex VI of Regulation (EU) 2021/241) in relevant aspects of these other objectives: (v) climate change mitigation, and (vi) climate change adaptation.

<u>EXAMPLES</u>

*<u>Example 1: Synergy of compounds in the allelopathic biomass mixture: effectiveness separately of allelopathic compounds in the species mixture against species.</u>*

The objective of this bioassay was to compare the herbicidal effect of each of the individual species (*Eucalyptus globulus, Cytisus scoparius* and *Mentha suaveolens*) with the mixture of the 3 species at the ratio 65:25:10.

The phyllodes of *E. globulus* and the flowering branches of *C. scoparius* and *M. suaveolens* were collected fresh and dried at room temperature and darkness. They were subsequently crushed for use.

The used agricultural soil was collected from a crop field located in Vigo (Galicia) that had been dedicated to horticultural production for 15 years and then left fallow for the last four years. The soil was sieved through 2 mm mesh to remove debris and plant balances.

Two agricultural weed species, *Amaranthus powellii* and *Digitaria sanguinalis,* were used as dicotyledon and monocotyledon target species, respectively. These seeds were collected in a state of maturation in the assay fields of the Biological Mission of Galicia (Pontevedra, Spain).

In order to simulate the potential interactions between volatile compounds and water-soluble compounds released from eucalyptus phyllodes, flowering twigs of broom, flowering twigs of apple mint, or the mixture of the three species at the ratio (65:25:10), the following assay was carried out.

For the preparation of the aqueous extracts the protocol described in Puig et al. 2013. Weed Science, 61(1), 154-161; Pardo-Muras et al. 2020. South African Journal of Botany, 133, 201-211.). To study the effect on germination, 20 seeds of each of the target weed species were incubated on 30 grams of agricultural soil moistened with 15 mL of aqueous extract in 1L airtight cans. In addition, one gram of dry weight of each of the plant species or of the mixture of all of them was wrapped in sterile cotton gauze and placed hanging from the lid. The control treatment consisted of seeds incubated on agricultural soil moistened with distilled water and a hanging cotton gauze containing pieces of plastic straws (as inert material) in a volume similar to that of the plant material.

To observe early growth, 7 pre-germinated seeds (radicle length between 1 and 3 mm; Mayer and Poljakoff-Mayber, 1963) were used. The Germination of Seeds. 1st ed. Oxford: Pergamon Press. pp. 244) under the same conditions as for the germination bioassay. The length of the root and the aerial part of the pre-germinated seeds were measured after 48 h.

The assays were carried out under *in vitro* conditions, 33/20 °C and photoperiod of 12 hours of light and 12 hours of darkness. Three replicates were performed for each treatment and target weed species.

**Figure** 1 shows the assay result. Apple mint biomass (Ms) alone releases volatile and phenolic compounds capable of almost completely inhibiting the germination of both weeds, showing its intense bioherbicidal potential. Eucalyptus (Eg) and broom (Cs) separately had no significant effect on the germination of the assayed weeds, but they were effective when mixed, inhibiting the germination of *A. powellii* by 20%, and that of D. *sanguinalis* by 29%. The growth of *A. powellii* was reduced by the secondary metabolites released from the broom biomass, from the mixture, and from apple mint between 82% and 96% and to a lesser extent by the eucalyptus biomass (up to 61%). In the case of D. *sanguinalis,* the biomass of apple mint reduced growth by more than 90%, followed by the biomass of the mixture up to 86%. While the broom and eucalyptus biomasses reduced the growth of the aerial part of D. *sanguinalis* by 61% and 38%, respectively.

The effect of the mixture for both weeds was greater than the sum of the effects of the three species separately. Eucalyptus reduced the root length of *A. powellii* by 47%, broom reduced it by 81% and apple mint by 86%; while the mixture (observed effect, O) reduced the root length of *A. powellii* by 83%. However, if the percentage of participation of each of the species in the mixture is taken into account (65:25:10), it would be expected that 65% of eucalyptus would reduce the root length of *A. powelli* by 30%, 25% of broom would reduce it by 20% and 10% of apple mint would reduce it by 9%. Thus, if the effect of the mixture was additive, the mixture would be expected to reduce root length by 59%, while the effect of the three species in the mixture (observed effect, O) produced a reduction of 83% (Figure 2). This demonstrates the synergistic interactions between both volatile and soluble compounds released from the three plant species, making the effect of each species in the mixture greater, although the compounds of each species act at a lower concentration.

The presence of soluble allelochemicals present in the biomass of each species and in the mixture of the three species was also analyzed. The result is shown in Table 1.

Table 1. Soluble allelochemicals are present in the biomass of eucalyptus, broom, apple mint and the mixture of the three species.

|  | Eucalyptus | Broom | Apple mint | Mixture |
|---|---|---|---|---|
| ***Phenolic acids*** |  |  |  |  |
| Gallic | + |  |  | + |
| Protocatechuic | + |  | + | + |
| pOH benzoic |  | + | + | + |
| pOHbenzaldehyde | + |  |  | + |
| Vanillic |  |  | + | + |
| Caffeic | + | + | + | + |
| Syringic |  |  | + |  |
| p-Cumaric |  | + | + | + |
| Ferulic |  | + | + | + |
| Rosmarinic |  |  | + | + |

(continued)

| Flavonoids | | | | |
|---|---|---|---|---|
| Ellagic acid | + | | | + |
| Rutin | + | | | + |
| Luteolin | | | + | |
| Apigenin | | | + | |
| Quercetin | + | | | |
| Ellagitannin 1 | + | | | + |
| Ellagitannin 2 | + | | | + |
| Prunetin | | + | | |
| TOTAL NO. | 9 | 5 | 10 | 13 |

*Example 2: Assay with the bioherbicidal mixture of eucalyptus, broom and apple mint (65:25:10) in horticultural production greenhouse*

Next, the herbicidal effect of the allelopathic biomass mixture compared to apple mint biomass, which has the highest phytotoxic potential of the three species, was studied.

This assay was carried out in a horticultural production greenhouse in Pazos de Borbén (Galicia). The soil was prepared by using a rotary cultivator, and compost was applied as a fertilizer.

The land was divided into 16 plots of 2,25 $m^2$ each, which were randomly distributed to accommodate the assay treatments: dry and crushed biomass of *M. suaveolens* 1 % (w/w) was incorporated into the soil (Puig et al. 2013. Weed Science 61(1), 154-161), four plots were used for manual weeding treatment, in another four plots the bioherbicidal mixture (eucalyptus: broom: apple mint 65:25:10) was incorporated at 1% and the remaining four plots were left untreated as the assay control. In each plot, bean seedlings (*Phaseolus vulgaris* L. cv. Amethyst) were planted 20 cm apart, and turnip seed (*Brassica rapa* L.) was sown at a rate of 4 $g \cdot m^{-2}$.

The spontaneous weeds that emerged in each plot were sampled every 15 days during the two months following the assay start. Sampling was performed with the help of quadrants. Three quadrants were thrown for each plot. The arvensis flora enclosed in each quadrant was cut at ground level, stored and stored at 4°C. Subsequently, the botanical characterization of the samples, the classification into main groups (monocotyledons or dicotyledons) and the counting of seedlings of each group was carried out. The separated plants were oven dried at 70 °C for 72 h and weighed to determine their dry biomass (g).

Weeding was carried out twice in the so-called "weeding" plots, after the first (15 days after the incorporation of the treatment, DTI) and the second sampling (30 DTI) of weeds. The plots with apple mint and mixture only required weeding at 30 DTI.

Figure 3 shows how both treatments (third and fourth column respectively) controlled the emergence of both dicotyledon (A) and monocotyledon (B) weed species, reducing the number of seedlings by more than 90% compared to the control (first column) at 60 days after the start of the assay. It should be noted that, despite the intense allelopathic potential of apple mint demonstrated in previous assays, the mixture was equally effective, with no statistically significant differences between both treatments.

Figure 4 shows how the production of bean (A) and turnip (B) crops were not affected by herbicidal fertilizers, in fact, the mixture of species tended to stimulate turnip production (fourth column). First column: control, second column: weed, third column: apple mint, fourth column: mixture.

These results confirm that the mixture of eucalyptus, broom and apple mint has more herbicidal capacity against weeds than any of the separate species or the additive effect thereof, and not only does it not affect the growth of crops of interest, but also promotes their growth. These results are surprising and unpredictable considering the prior art disclosures. The concentrations of each species are not relevant since, even adding apple mint in a much smaller amount, the inhibitory effect is very significant.

*Example 3: Processing of biomass in pellets*

To obtain biomass pellets, the fresh plant material was dried at room temperature and in the dark. Next, it was crushed until fragments of between 3 - 5 cm were obtained. The crushed material was milled to a particle size equal to or less than 5 mm. It was then homogenized and moistened until a humidity of around 20% $\pm$ 5% was obtained.

The homogenized material was pelletized in an electric pelletizer with a 380 V motor, 7,5 kW power, fixed rollers, and 6 mm die. The resulting pellet had a density of 1.100 $kg/m^3$.

The composition of the pellets of each species was analyzed. Eucalyptus pellets were observed to have an average C and N content of 46% and 1,1%, respectively, and average $PO_4^-$, $K^+$, $Mg^{2+}$ and $Ca^{2+}$ values of 1,66, 1,19, 1,45 and 10,64 mg·g$^{-1}$. respectively. The eucalyptus: broom: apple mint mixing pellets (65:25:10) had an average C and N content of 45,6% and 1,5%, respectively, and average $PO_4^-$, $K^+$, $Mg^{2+}$ and $Ca^{2+}$ values of 1,16, 3,17, 1,41 and 9,26 mg·g$^{-1}$, respectively.

In addition, the presence of both soluble and volatile allelochemicals present in the pellets with eucalyptus biomass and in the pellets with the mixture of the three species was analyzed. The result is shown in Table 2.

Table 2. Soluble and volatile allelochemicals present in eucalyptus pellets and mixing pellets.

|  | Eucalyptus pellets | Mixed pellet |
| --- | --- | --- |
| **Soluble Compounds** |  |  |
| p-Cumaric |  | + |
| Rosmarinic |  | + |
| Ellagic acid | + | + |
| Rutin | + | + |
| Apigenin |  | + |
| **Volatile Compounds** |  |  |
| alpha-Pinene | + | + |
| Camphene | + |  |
| beta-Pinene | + | + |
| alpha-Phelandrene |  | + |
| p-Cimene | + | + |
| D-Limonene |  | + |
| Eucalyptol | + | + |
| Limonene |  | + |
| Copaene | + | + |
| Aloaromadendrene | + | + |
| **TOTAL NO.** | **9** | **14** |

*Example 4: Eucalyptus pellets vs. crushed material: evidence of greater effectiveness and duration of the herbicidal effect of the pellets.*

In addition to weed control in crops, another of the most labor-intensive agricultural jobs is the weeding and removal of weeds that invade passages, corridors, and borders of crop plots. The objective of this bioassay was to compare the long-term weeding effect of higher doses of crushed eucalyptus or pelleted contributed superficially to the soil, against a control (without eucalyptus).

The field experiment was carried out in As Eiras (Galicia). The land had been fallow for more than 20 years, colonized by spontaneous vegetation. The phyllodes and fine branches of eucalyptus (*E. globulus*) were collected fresh and dried at room temperature and darkness. For the plant material in the form of pellets, the pelleting protocol described in Example 3 was followed.

Plots of 1,25 m$^2$ were superficially cleared and ploughed, to which 5,8 kg of eucalyptus foliage were provided, either crushed or pelleted, which were mixed superficially with the soil. This corresponded to a dose of 4% (w/w) which was assayed to monitor the efficacy in maintaining weeding of the plots and the duration of the weeding effect, versus untreated control plots.

30 days after incorporation (DTI), the emergence of dicotyledon arvensis species was counted, in triplicate for each treatment. At 90 DTI, the biomass of the weeds was harvested for botanical characterization and classification into main groups according to Pedrol et al. 2010. Soil and Tillage Research, 110(1), 134-142), and then in species. Each of the groups obtained was dried at 70 °C for 72 h and used to determine the total weed biomass.

Figure 5 shows that one month after the incorporation of the plant material, the crushed eucalyptus controlled approximately 65% the emergence and establishment of the dicotyledon weeds, while the pellets reduced the number of weeds by more than 96% (ANOVA, $P \leq 0,01$).

Eucalyptus pellets significantly reduced the density (96,9%) and biomass (92%) of dicotyledon species, such as *Echium plantagineum* or *Sonchus sp.* (with total elimination in this treatment) compared to the control (Table 3). Crushing had apparent effects on the density (65,6%) and biomass (64%) of dicotyledon weeds, but in the latter case without statistical differences compared to the control (Table 3).

Table 3. Effects of eucalyptus pellets and crushed biomass superficially incorporated into the soil, on the establishment and growth of arvensis flora 90 days after incorporation (DTI). Values represent density (number) and biomass (grams) per $m^2$.

| Variable | Sig. | Control | | Pellets | | Crushed | |
|---|---|---|---|---|---|---|---|
| Number of species | * | 5,3 | a | 2,0 | b | 4,3 | a |
| Density of dicotyledon arvensis (n°·m$^{-2}$) | ** | 170,7 | a | 5,3 | b | 58,7 | b |
| Biomass of dicotyledon arvensis (g·m$^{-2}$) | * | 213,3 | a | 16,8 | b | 75,9 | ab |
| Total biomass of arvensis flora (g·m$^{-2}$) | * | 329,3 | a | 148,5 | b | 162,1 | b |

Sig.: asterisks denote significant differences between treatments: *, $P \leq 0,05$; **, $P \leq 0,01$; ** *, $P \leq 0,001$; n.s., non-significant (ANOVA or Kruskal-Wallis H-test). For each variable, different letters indicate significant differences between treatments (post-hoc LSD or Tamhane's T2 test for multiple mean comparison).

At 3 months of assay, only pellet treatment showed a reduction in the number and biomass of dicotyledon weeds. It was thus shown that the pellets have a longer-lasting herbicidal effect compared with crushed plant material. A year later, the weeding effects of the pellets were still visually noticeable. Figure 6 shows the state of the plot with crushed eucalyptus and with pellets at 5 months after incorporation, as well as the control plot.

*Example 5: Eucalyptus Pellet assay: Herbicidal Field Evidence*

The objective of this assay was to evaluate the herbicidal effect of soil-incorporated eucalyptus pellets in a horticultural field under real production conditions.

The field experiment was carried out during the orchard tomato growing season in Ponte Sampaio (Pontevedra). The plot had an extensive history of horticultural production, being fallow the three years prior to the assay.

Plots of 1 $m^2$ were randomly distributed with eucalyptus pellets obtained according to Example 3, or without pellets (control plots), with four replicates per treatment. In the plots treated with pellets, 1,3 kg of eucalyptus pellets were homogeneously spread, and with the help of a hoe they were mixed with the soil of the first 10 cm. Seedlings were used for the orchard of two tomato cultivars ('pear' and 'oxheart').

Weed sampling was performed at 10, 21, 31, 42, 70, 92 and 150 days after incorporation (DTI) by randomly casting 25 cm x 25 cm squares on each plot, excluding margins to avoid edge effects. The arvensis flora included in the table was uprooted and taken to the laboratory for botanical characterization and classification into major groups (monodicotyledons or dicotyledons) and species, obtaining the number of different weed species per plot. Each of the groups obtained was dried at 70 °C for 72 h and used to determine the total weed biomass and the contribution of each botanical group to the total biomass.

The arvensis species of the plots (with or without pellets) were weeded manually when deemed necessary, to avoid competition with the crop.

Figure 7 shows how *Digitaria sanguinalis* was the most abundant arvensis species in the plots, but *Cyperus* sp., *Amaranthus* sp., and *Portulaca olarecea* were also present. The herbicidal effect of eucalyptus pellets (dashed line) was statistically significant from the first sampling (10 DTI). At one and a half months after the application of the treatment (42 DTI), it was observed that the pellets had significantly controlled (continuous line) the emergence of *D. sanguinalis* (31%) and of the dicotyledon arvensis flora (70%) compared to the control plots. Seventy days after incorporation, the effect of the pellets on the number of weeds was very significant compared to the pre-weeding control ($P \leq 0,001$), with the number of *D. sanguinalis* being reduced by 71%, and of dicotyledon and monocotyledon weeds by 90% and 66%, respectively.

At 42 DTI, the pellets reduced the total biomass of *D. sanguinalis* by 55% and of dicotyledon and monocotyledon weeds by 89% and 57%, respectively (Figure 8, dark gray columns: without pellets; light gray columns: with pellets). Therefore, in the first six weeks of cultivation it was necessary to manually weed the plots without pellets, but not the plots with pellets, which did not need weeding until a month later (70 DTI). The plots without pellets needed a second weeding at 3 months after the start of the experiment (92 DTI). As can be seen in the figure, after 5 months from the incorporation (150 DTI) the eucalyptus pellets continued to control the dicotyledon arvensis flora with reductions of more than 80% with respect to the plots without pellets.

The biomass of the monocotyledon species was somewhat higher, partly occupying the space left by the dicotyledon species. However, there were no significant differences between treatments in the accumulated biomass of weeds at the end of the assay (150 DTI) even though the plots without pellets required two manual weeding. This suggests half of weed infestation and weeding as a result of a single initial application of pellets.

This assay demonstrated that the eucalyptus pellet herbicide controls the emergence of weeds from the soil seed bank, reducing the need for manual weeding. In the plots without pellets, after the first weeding, the weeds emerged again, and a second weeding was necessary to achieve the tomato harvest. It is likely that the use of the pellets during successive crop cycles will progressively reduce the seed bank of the soil, until it is exhausted, so that manual weeding can be dispensed with.

*Example 6: Biomass mixtures of allelopathic species: selection of effective ratios and optimal mixture*

The aim of this assay was to establish the ideal ratio of biomass of each of the three allelopathic species in the mixture, and to establish ranges for each. The proposed species mixtures are proportional to the abundance of each species in the Atlantic agroecosystem and selected according to their specificity for the control of different weeds.

The ranges of starting ratios of each ingredient in the proposed allelopathic biomass mixtures are consistent with the abundance of each species in the Atlantic agroecosystem and allelopathic potential:

- Eucalyptus is the most abundant ingredient in the Atlantic agroecosystem. The biomass of phyllodes and fine branches maintains bioherbicidal properties all year round.

- The broom is abundant in nature, being a native species of the Atlantic scrub. It has bioherbicidal effects on species that the eucalyptus does not control (*Convolvulus arvensis* and *Portulaca oleracea*), although its greatest allelopathic potential coincides with its flowering state in spring.

- Apple mint has very intense bioherbicidal effects, being the most phytotoxic species. However, compared to eucalyptus and broom, the availability of biomass in the agroecosystem is limited, as well as its dry matter yield.

The phyllodes of *E. globulus* and the flowering branches of *C. scoparius* and *M. suaveolens* were collected fresh and dried at room temperature and darkness. They were subsequently crushed for use.

Three agricultural weed species were used: *D. sanguinalis* L. (monocotyledons), *A. powellii* L. and *C. canadensis* L. (dicotyledons) as target species.

7 mixtures were made at different ratios of *E. globulus, C. scoparius* and *M. suaveolens* (E:C:M): mixture 1 (65:25:10), mixture 2 (60:25:15), mixture 3 (70:25:5), mixture 4 (60:35:5), mixture 5 (75:20:5), mixture 6 (80:10:10), mixture 7 (90:5:5).

For the preparation of the aqueous extracts, the dry plant material of each species mixed at the corresponding ratio was immersed in distilled water at a dry weight/volume ratio of distilled water of 16,7 g • L$^{-1}$ (Puig et al. 2013. Weed Science, 61(1), 154-161.; Pardo-Muras et al. 2020. South African Journal of Botany, 133, 201-211). The flasks were kept in orbital agitation and in the dark at room temperature for 24h. Subsequently, they were vacuum-filtered by Whatman No.2 paper.

For *A. powelli,* 25 seeds were plated in 5,5 cm diameter plates with filter paper moistened with 1,5 mL of aqueous extract of each mixture or distilled water (control). Four replicates were done for each treatment. While for *D. sanguinalis* and *C. canadensis,* 6-well plates were employed. In each well, a total of 10 seeds were placed on the filter paper moistened with 600 µL of the extract; or distilled water. 6 replicates were conducted per treatment.

Plates were incubated at 33/20 °C and photoperiod of 12h light and 12h dark. After 72, 96 and 120 h of incubation for *C. canadensis, D. sanguinalis* and *A. powelli,* respectively, the number of germinated seeds was counted and their root and aerial length was measured. In addition, the Vigor Index (IV) was calculated from the formula defined by Anupama et al. 2014. Asian Journal of Science and Technology, Vol. 5, pp. 412-416:

$$IV = \text{germination percentage (\%)} \cdot \text{total seedling length (mm)}$$

All mixtures 1 to 7 inhibited germination and reduced the early growth of the three weeds significantly with respect to the control (Figure 9). On the other hand, the mixtures presented phytotoxic effects statistically indistinguishable from each other.

Considering that one of the most problematic and abundant summer weed species in the crop fields is *D. sanguinalis,* the effect of the mixture on this weed was analyzed in detail. Figure 10 shows that mixtures 1, 2, 3 and 6 significantly inhibited the germination of *D. sanguinalis* between 20 and 28% with respect to the control. Although all the mixtures negatively affected the radicle length, mixtures 1 and 6 showed the highest percentages of reduction (80%). On the other hand, mixture 1 (65:25:10) was the one that most reduced the growth of the aerial part (88%), which translated into a greater reduction in the vigor index of *D. sanguinalis.*

This experiment showed that all the mixtures were phytotoxic against the germination and early growth of the studied weeds.

*Example 7: Herbicidal activity of allelopathic biomass mixing pellets in a crop*

The objective of this assay was to corroborate the herbicidal effect of the pellets of the eucalyptus: broom: apple mint mixture in a bean crop.

The agricultural land used was collected from a crop field located in Vigo (Galicia). The field had been dedicated to horticultural production for 15 years and was then left fallow for the last four years. The soil was sieved through 2 mm mesh to remove debris and plant balances.

The phyllodes of eucalyptus and the flowering branches in broom and apple mint were collected fresh and dried at room temperature and darkness. Once the plant material was dry, the pelleting protocol described in Example 3 was followed: processing of the biomass into pellets. The pellets of the eucalyptus: broom: apple mint mixture were made at the ratio (65:25:10).

The pot assay was carried out under greenhouse conditions (natural light, $T \leq 26°C$). The 20 cm diameter plastic pots (5L) were filled with the agricultural soil and the pellets were mixed with the soil of the first 10 cm on the surface. The dose used was 1% (ratio of dry weight of plant material to dry weight of soil), equivalent to 41 g of pellets in each pot. The control treatment consisted of agricultural soil mixed with plastic straws that mimic the hollowing effect of the same volume of pellets incorporated into the soil (Wuest et al. 2000. Soil Tillage Res. 55:175-182). Each treatment was replicated 4 times. The pots were watered to maximum field capacity. Subsequently, 3 equidistant bean seeds were sown at a depth of 2 cm (*Phaseolus vulgaris* L. cv. Efequince), and 24 mg of seeds of each of the following weeds: *A. powellii, P. oleracea, S. nigrum,* and *E. crus-galli* (6 g·m$^{-2}$; Puig et al. 2013 Weed Science, 61(1), 154-161; Pardo-Muras et al. 2020. Plants 9: 203).

The emergence of the weeds and bean seedlings was recorded every two days until the control pots (without pellets) were crowded (12 days after incorporation). Thirty days after incorporation, the final number of seedlings was counted. The arvensis flora was harvested by cutting the species at ground level; they were identified and separated by species. Then, each group was dried at 70 °C for 72 h to obtain the aerial biomass by species (g dry weight). Bean plants were processed as described for the arvensis flora denoted above.

The allelopathic biomass mixture was shown to be pelletizable without the need for a binder. This is mainly because the phyllodes and fine branches of eucalyptus have a high content of essential oil and lignin that act as natural binders, keeping the pellet compact. This corroborates the need for its majority presence in the mixture, in addition to its herbicidal potential and availability of biomass in the agroecosystem.

The mixing pellets reduced the emergence of arvensis species from day 4 after incorporation, with day 12 being 52% lower relative to the control (without pellets) ($P \leq 0,01$; Figure 11, solid line without pellets, dashed line with mixing pellets).

Thirty days after incorporation of the mixing pellets, the data revealed a 50% reduction in the total number of seedlings per pot relative to the control (without pellets). The use of mixing pellets controlled the germination of broadleaf or dicotyledon weeds (e.g., *A. powellii, P. oleracea, and S. nigrum*) by 52 to 84% and narrowleaf or monocotyledonous arvensis flora (e.g., *E. crus-galli*) by up to 24% (Table 4).

Table 4. Effects of allelopathic biomass mixing pellets incorporated superficially into the soil, on the establishment and growth of weeds 30 days after incorporation (DTI). The values represent the percentage reduction compared to the control pots (without pellets).

|  | Reduction (%) | Sig. |
|---|---|---|
| **General Effects (% r.c.)** |  |  |
| Weed seedling density | 50,0 | *** |
| Weed density | 20,2 | * |
| monocotyledons |  |  |
| dicotyledon weed density | 66,6 | *** |
| **Specific effects (% r.c.)** |  |  |
| Densities per weed species |  |  |
| *Amaranthus powellii* | 51,8 | ** |
| *Echinochloa crus-galli* | 23,6 | * |
| *Portulaca oleracea* | 69,4 | ** |
| *Solanum nigrum* | 84,3 | ** |

Sig.: Asterisks denote significant differences relative to control (without pellets): one sign, $P \leq 0,05$; two signs, $P \leq 0,01$; three signs, $P \leq 0,001$; n.s., not significant (t-test for independent samples).

The use of the mixing pellets was innocuous for the bean crop, whose aerial biomass did not suffer significant reductions compared to the control without pellets.

**Claims**

1. A herbicidal composition **characterized in that** it comprises eucalyptus biomass (*Eucalyptus globulus* Labill) and broom (*Cytisus scoparius* (L.) Link) and apple mint (*Mentha suaveolens* Ehrh.).

2. The herbicidal composition of claim 1, **characterized in that** it comprises between 40 and 100% w/w eucalyptus biomass, between 0 and 40% w/w broom biomass and between 0 and 20% w/w apple mint biomass, relative to the total weight of the composition.

3. The herbicidal composition of claim 2, **characterized in that** it comprises between 60 and 90% w/w eucalyptus biomass, between 5 and 30% w/w broom biomass and between 5 and 10% w/w apple mint biomass, relative to the total weight of the composition.

4. The herbicidal composition of claim 3, **characterized in that** it comprises between 60 and 75% w/w eucalyptus biomass, between 20 and 35% w/w broom biomass and between 5 and 10% w/w apple mint biomass, relative to the total weight of the composition.

5. The herbicidal composition of claim 4, **characterized in that** it comprises 65% w/w eucalyptus biomass, 25% w/w broom biomass and 10% w/w apple mint biomass, relative to the total weight of the composition.

6. The herbicidal composition according to any one of claims 1 to 5, **characterized in that** it is in a crushed form or pelleted.

7. The herbicidal composition according to claim 6, **characterized in that** the composition is pelleted.

8. Use of the herbicidal composition according to any one of claims 1 to 7 in inhibiting the germination and/or growth of arvensis species.

9. A method of inhibiting the germination and/or growth of arvensis species comprising administering to the soil crushed biomass or pellets consisting of the composition of any one of claims 1 to 5.

FIG. 1

**FIG. 2**

**FIG. 3**

FIG. 4

FIG. 5

## FIG. 6

Control          Pellets          Crushed

## FIG. 7

FIG. 8

FIG. 9

FIG. 10

**FIG. 11**

# INTERNATIONAL SEARCH REPORT

| International application No. |
| --- |
| PCT/ES2023/070332 |

## A. CLASSIFICATION OF SUBJECT MATTER

See extra sheet

According to International Patent Classification (IPC) or to both national classification and IPC

## B. FIELDS SEARCHED

Minimum documentation searched (classification system followed by classification symbols)
A01N, A01P

Documentation searched other than minimum documentation to the extent that such documents are included in the fields searched

Electronic data base consulted during the international search (name of data base and, where practicable, search terms used)

EPODOC, INVENES, WPI, TXTE, NPL, EMBASE, BIOSIS, AGRICOLA, SCISEARCH, CA, INTERNET

## C. DOCUMENTS CONSIDERED TO BE RELEVANT

| Category* | Citation of document, with indication, where appropriate, of the relevant passages | Relevant to claim No. |
| --- | --- | --- |
| A | ES 2719451 A1 (UNIV VIGO) 10/07/2019, the whole document; in particular, abstract; page 7, lines 9-13 and claims. | 1-9 |
| A | PARDO-MURAS MARIA et al.: "On the bioherbicide potential of *Ulex europaeus* and *Cytisus scoparius*: Profiles of volatile organic compounds and their phytotoxic effects", PLOS One OCT, 29/10/2018, Vol. 13, Nº 10, Article No.: e0205997, ISSN 1932-6203(print) ISSN 1932-6203(electronic), doi:10.1371/journal.pone.0205997, the whole document; in particular, abstract and conclusions. | 1-9 |
| A | PARDO-MURAS MARIA et al.: "Complex Synergistic Interactions among Volatile and Phenolic Compounds Underlie the Effectiveness of Allelopathic Residues Added to the Soil for Weed Control", Plants-Basel, 30/04/2022, Vol. 11, Nº 9, Páginas Article No.: 1114, ISSN 2223-7747(electronic), doi:10.3390/plants11091114, the whole document; in particular, abstract, last paragraph page 2 and first paragraph from "Conclusions". | 1-9 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 22/06/2023 | **(23/06/2023)** |

| Name and mailing address of the ISA/ | Authorized officer |
| --- | --- |
| OFICINA ESPAÑOLA DE PATENTES Y MARCAS<br>Paseo de la Castellana, 75 - 28071 Madrid (España)<br>Facsimile No.: 91 349 53 04 | A. Maquedano Herrero<br><br>Telephone No. 91 3495474 |

Form PCT/ISA/210 (second sheet) (July 2022)

## INTERNATIONAL SEARCH REPORT

| International application No. |
| --- |
| PCT/ES2023/070332 |

C (continuation).                                       DOCUMENTS CONSIDERED TO BE RELEVANT

| Category * | Citation of documents, with indication, where appropriate, of the relevant passages | Relevant to claim No. |
| --- | --- | --- |
| A | GONZÁLEZ PUIG C.: "*Eucalyptus globulus Labill.* for weed control in Organic Agriculture: from molecules to the field", tesis doctoral. Universidad de Vigo, 2017, the whole document; in particular, page 45, first paragraph and last line; page 46, first and second paragraphs and page 49, last paragraph. | 1-9 |
| A | IGLESIAS-RODRÍGUEZ J et al.: "Humildad y fiereza en la misma pieza: uso del mastranzo (*Mentha suaveolens Ehrh.*) para control de malezas", XVII Congreso de la Sociedad Española de Malherbología, 2019, pages 320-325, the whole document; in particular, abstract. | 1-9 |
| A | WO 2021148684 A1 (KIMITEC BIOGROUP S L) 29/07/2021, the whole document; in particular, claim 8. | 1-9 |

Form PCT/ISA/210 (continuation of second sheet) (July 2022)

## INTERNATIONAL SEARCH REPORT

Information on patent family members

| | International application No. |
|---|---|
| | PCT/ES2023/070332 |

| Patent document cited in the search report | Publication date | Patent family member(s) | Publication date |
|---|---|---|---|
| ES2719451 A1 | 10.07.2019 | NONE | |
| WO2021148684 A1 | 29.07.2021 | JP2023519648 A | 12.05.2023 |
| | | US2022354128 A1 | 10.11.2022 |
| | | KR20220143042 A | 24.10.2022 |
| | | ES2926555 A2 | 26.10.2022 |
| | | BR112022013069A2 | 06.09.2022 |
| | | AU2020424969 A1 | 11.08.2022 |

Form PCT/ISA/210 (patent family annex) (July 2022)

**INTERNATIONAL SEARCH REPORT**

International application No.

PCT/ES2023/070332

CLASSIFICATION OF SUBJECT MATTER

*A01N65/28* (2009.01)
*A01N65/20* (2009.01)
*A01N65/22* (2009.01)
*A01P13/02* (2006.01)

Form PCT/ISA/210 (extra sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2719451 B2

**Non-patent literature cited in the description**

- **HOLT**. *Weed Technol.*, 1992, vol. 6, 615-620
- **HEAP**. *The International Survey of Herbicide Resistant Weeds.*, 2021, www.weedscience.com
- **WESTWOOD et al.** *Weed Sci.*, 2018, vol. 66, 275-285
- **RICE**. Allelopathy. Academic Press, 1984, 189
- **SOLTYS et al.** Herbicides-Current research and case studies in use. Intech, 2013, 517-542
- **KOBAYASI**. *Weed Biology and Management*, 2004, vol. 4, 1-7
- **PUIG et al.** *Crop Protection*, 2019, vol. 121, 57-65
- **PARDO-MURAS et al.** *Plants*, 2020, vol. 9, 203
- Mentha suaveolens Ehrh. for weed control: from in vitro evidence to application in greenhouse vegetable production. **IGLESIAS-RODRIGUEZ**. MSc Thesis. University of Vigo, 2016
- **PUIG et al.** *J Chem Ecol*, 2018, vol. 44 (7-8), 658-670
- **PARDO-MURAS et al.** *Plants*, 2020, vol. 9 (2), 203
- **CAMPIGLIA et al.** *Italian Journal of Agronomy*, 2007, vol. 2, 171-175
- **MAIA et al.** *Revista Brasileira de Plantas Medicinais*, 2011, vol. 13, 253-25
- **PUIG et al.** *Weed Science*, 2013, vol. 61 (1), 154-161
- **PARDO-MURAS et al.** *South African Journal of Botany*, 2020, vol. 133, 201-211
- **MAYER ; POLJAKOFF-MAYBER**. The Germination of Seeds. Pergamon Press, 1963, 244
- **PEDROL et al.** *Soil and Tillage Research*, 2010, vol. 110 (1), 134-142
- **ANUPAMA et al.** *Asian Journal of Science and Technology*, 2014, vol. 5, 412-416
- **WUEST et al.** *Soil Tillage Res.*, 2000, vol. 55, 175-182